# EUROPÄISCHE PATENTANMELDUNG

(11) **EP 1 233 542 A1**
(43) Veröffentlichungstag der Anmeldung: **21.08.2002**
(21) Anmeldenummer: 01103432.9
(22) Anmeldetag: 14.02.2001
(51) Int. Cl.: H04B 7/04, H01Q 1/24

(54) **Schaltungsanordnung für ein Mobilfunksystem mit einer Basisstation und einer Antenneneinrichtung**

(71) Anmelder: SIEMENS AKTIENGESELLSCHAFT, 80333 München (DE)
(72) Erfinder: Rademacher, Leo, Dr., 83607 Holzkirchen (DE); Rudolf, Hans, 55127 Mainz (DE); Shaalan, Mohamed, 81369 Muenchen (DE)

(57) **Zusammenfassung**

Die Erfindung betrifft eine Schaltungsanordnung für ein Mobilfunksystem mit einer Basisstation und mit einer nichtadaptiven Antenneneinrichtung, wobei die Basisstation n Ausgänge für n in Frequenz und Amplitude im wesentlichen gleiche, trägerfrequente Signale aufweist und diese n Signale mit Hilfe von Einrichtungen zur Signalaufteilung und Zusammenführung gegebenenfalls mit Phasenkorrektur an den Betrieb einer nichtadaptiven Antenneneinrichtung angepasst werden.

## Beschreibung

Die Erfindung betrifft eine Anordnung für ein Mobilfunksystem mit einer Basisstation mit n Ausgängen, deren Signale in Frequenz und Amplitude im wesentlichen gleich sind, und mit einer Antenneneinrichtung.

Aus dem Artikel "An Overview Of Smart Antenna Technology For Mobile Communications Systems" aus IEEE Communications Surveys, Fourth Quarter 1999, Vol. 2, No. 4 sind Basisstationen mit n Anschlüssen bekannt, bei denen die dort auftretenden Signale vorzugsweise für den Betrieb einer adaptiven Antennenanordnung, die aus n Einzelantennen besteht, verwendet werden.

Dabei wird beispielsweise im Sendefall ein zu sendendes Signal innerhalb der Basisstation derart aufgeteilt, dass die n Anschlüsse der Basisstation in Amplitude und Frequenz im wesentlichen gleiche Signale mit verschiedenen Phasenlagen aufweisen. Jedes dieser Signale wird an eine Einzelantenne einer adaptiven Antennenanordnung weitergeleitet und als Sendesignal abgestrahlt. Durch die verschiedenen Phasenlagen der einzelnen Signale der Basisstation und damit der Sendesignale der Einzelantennen bildet sich ein Summenstrahlungsdiagramm der adaptiven Antennenanordnung aus, das eine räumliche Vorzugsrichtung besitzt.

Durch die Anzahl n der Einzelantennen der adaptiven Antennenanordnung ist es möglich, das Summenstrahlungsdiagramm der adaptiven Antenne zu formen. Durch die Wahl von verschiedenen Trägerfrequenzen und der Phasenlagen zwischen den Signalen der Basisstation ist es möglich, mehrere voneinander unabhängige Summenstrahlungdiagramme der adaptiven Antennenanordnung zu erzeugen, von denen jedes einzelne eine eigene räumliche Vorzugsrichtung besitzt. Die Kapazität eines Funknetzes kann dadurch erhöht werden.

Die Abmessungen einer adaptiven Antennenanordnung sind frequenzabhängig und bewegen sich typischerweise im Bereich von ca. 0,5 bis 1,5 m Breite und im Bereich von ca. 0,5 bis 1,5 m Höhe. Manche bevorzugte Antennenstandorte sind jedoch für adaptive Antennenanordnungen dieser Größe nicht geeignet. Befindet sich ein Antennenstandort beispielsweise auf einem historischen Gebäude, so kann er oft aus Gründen der Ästhetik oder des Denkmalschutzes als Standort für derart große Antennenanordnungen nicht benutzt werden. Auch die Statik der nur in begrenzter Anzahl vorhandenen Antennenstandorte verbietet oft die Verwendung einer adaptiven Antennenanordnung, beispielsweise aufgrund der Windlast oder des Gewichts der Antennenanordnung.

Für den Einsatz an diesen Standorten sind deshalb in der Regel kleinere und damit unauffälligere Einzelantennen vorgesehen. Für diese müßten jedoch eigene Basisstationen entwickelt und produziert werden, die für den Betrieb von nichtadaptiven Antennen geeignet sein müßten. Durch die oft nur geringen Stückzahlen würde dies zu einem erhöhten Entwicklungs- und Fertigungsaufwand führen.

Der vorliegenden Erfindung liegt deshalb die Aufgabe zugrunde, eine Basisstation mit n Anschlüssen, deren Signale in Frequenz und Amplitude im wesentlichen gleich sind, an eine nichtadaptive Antenneneinrichtung anzupassen.

Die Aufgabe der Erfindung wird durch die Merkmale des Anspruchs 1 bzw. des Anspruchs 4 gelöst. Vorteilhafte Weiterbildungen der Erfindung sind in den Unteransprüchen angegeben.

Die Erfindung beinhaltet zwei bevorzugte Anordnungen für ein Mobilfunksystem mit einer Basisstation und mit einer Antenneneinrichtung.

In einer ersten bevorzugten Anordnung weist die Basisstation n voneinander entkoppelte Anschlüsse auf, zu denen in Frequenz und Amplitude im wesentlichen gleiche, in ihrer Phasenlage jedoch verschiedene Signale gelangen.

Die Basisstation beinhaltet eine digitale Signalsteuerungseinrichtung, die im Sendefall ein zu sendendes digitales Signal in n in Amplitude und Frequenz im wesentlichen gleiche, in ihrer Phasenlage jedoch verschiedene digitale Einzelsignale aufgeteilt und die im Empfangsfall aus den n Einzelsignalen ein Empfangssummensignal mit einheitlicher Phasenlage bildet.

Die Basisstation beinhaltet weiterhin eine Einrichtung zur Signalumwandlung dieser n Einzelsignale der Signalsteuerungseinrichtung in n analoge, trägerfrequente Funksignale für die n untereinander entkoppelten Anschlüsse der Basisstation im Sendefall. Im Empfangsfall werden in umgekehrter Richtung die n analogen, trägerfrequenten Funksignale in die n digitalen, in Amplitude und Frequenz im wesentlichen gleichen, in ihrer Phasenlage jedoch verschiedenen Einzelsignale umgewandelt, die dann an die digitale Signalsteuerungseinrichtung gelangen.

Um diese Basisstation an eine nichtadaptive Antenneneinrichtung anzuschalten, ist zwischen der Basisstation und der Antenneneinrichtung eine Einrichtung zur Zusammenführung bzw. Aufteilung angeordnet, die im Sendefall die an den n Anschlüssen der Basisstation auftretenden Funksignale mit im wesentlichen gleicher Amplitude und Frequenz aber verschiedener Phasenlage derart miteinander verknüpft, dass ein an einem der Anschlüsse der Einrichtung zur Zusammenführung bzw. Aufteilung auftretendes Summensignal mit einheitlicher Phasenlage entsteht und als Antennensignal an die Antenneneinrichtung gelangt und die im Empfangsfall das Antennensignal der Antenneneinrichtung, das als Summensignal mit einheitlicher Phasenlage an die Einrichtung zur Zusammenfassung bzw. Aufteilung gelangt, in die n in Frequenz und Amplitude im wesentlichen gleichen, jedoch in ihrer Phasenlage verschiedenen Funksignale aufteilt, die dann an die n Anschlüsse der Basisstation gelangen.

Vorteilhafterweise beinhaltet die Einrichtung zur Zusammenführung bzw. Aufteilung eine Butler-Matrix, die n Anschlüsse für die Funksignale der Basisstation und m Anschlüsse für die Antennensignale beziehungsweise Summensignale aufweist, wobei das Summensignal bzw. das Antennensignal an nur einen der m Anschlüsse gelangt und alle weiteren der m Anschlüsse jeweils mit einem Abschlusswiderstand abgeschlossen sind. Eine Butler-Matrix der hier beschriebenen Art ist beispielsweise aus dem "Taschenbuch der Hochfrequenztechnik" von Meinke - Gundlach, vierte Auflage, Veröffentlichungsjahr 1986, bekannt.

Vorteilhafterweise weisen die Funksignale der Basisstation untereinander eine im wesentlichen linear ansteigende Phasenlage auf.

In einer zweiten bevorzugten Anordnung für ein Mobilfunksystem mit einer Basisstation und mit einer Antenneneinrichtung weist die Basisstation n voneinander entkoppelte Anschlüsse auf, zu denen in Frequenz, Amplitude und Phasenlage im wesentlichen gleiche Signale gelangen.

Die Basisstation beinhaltet eine digitale Signalsteuerungseinrichtung, die im Sendefall ein zu sendendes digitales Signal in n in Amplitude, Frequenz und Phasenlage im wesentlichen gleiche digitale Einzelsignale aufteilt und die im Empfangsfall aus den n Einzelsignalen ein Empfangssummensignal mit einheitlicher Phasenlage bildet.

Die Basisstation beinhaltet dabei eine Einrichtung zur Signalumwandlung der n Einzelsignale der Signalsteuerungseinrichtung in n analoge trägerfrequente Funksignale für die n untereinander entkoppelten Anschlüsse der Basisstation im Sendefall. Im Empfangsfall werden die n analogen, trägerfrequenten Funksignale, die an die n untereinander entkoppelten Anschlüsse der Basisstation gelangen, in die n digitalen Einzelsignale umgewandelt und an die Signalsteuerungseinrichtung geführt.
Die Umwandlung geschieht mit Hilfe von Digital-Analog-Wandlern und Einrichtungen zur Modulation und zur Mischung sowie mit Filtern.

Zur Anschaltung der Basisstation an eine nichtadaptive Antenneneinrichtung ist zwischen der Basisstation und der Antenneneinrichtung eine Einrichtung zur Zusammenführung bzw. Aufteilung angeordnet, die im Sendefall die an den n Anschlüssen der Basisstation auftretenden Funksignale mit im wesentlichen gleicher Amplitude, Frequenz und Phasenlage derart miteinander verknüpft, dass ein an einem der Anschlüsse der Einrichtung zur Zusammenführung bzw. Aufteilung auftretendes Summensignal mit einheitlicher Phasenlage entsteht und als Antennensignal an die Antenneneinrichtung gelangt, und die im Empfangsfall das Antennensignal der Antenneneinrichtung, das als Summensignal mit einheitlicher Phasenlage an die Einrichtung zur Zusammenfassung bzw. Aufteilung gelangt, in die n in Frequenz, Amplitude und Phasenlage im wesentlichen gleiche Funksignale aufteilt und diese an die n Anschlüsse der Basisstation weiterleitet.

In einer bevorzugten Ausführungsform beinhaltet die Einrichtung zur Zusammenführung bzw. Aufteilung mindestens einen Wilkinson-Combiner, der beispielsweise aus dem Buch "RF Design Guide" von Peter Vizmuller, Veröffentlichungsjahr 1995, bekannt ist.

Bei beiden beschriebenen, bevorzugten Anordnungen beinhaltet die Antenneneinrichtung nur einen Anschluss, an dem das Antennensignal bzw. das Summensignal anliegt. Dabei kann die Antenneneinrichtung sowohl als Einzelantenne als auch als Gruppenantenne realisiert werden.

Durch die Erfindung wird eine Basisstation, die n entkoppelte Anschlüsse aufweist, deren Signale in Amplitude und Frequenz im wesentlichen gleich sind, an eine nichtadaptive Antenneneinrichtung angepasst. Dadurch wird eine weitere Fertigungslinie für Basisstationen vermieden, die eigens für den Betrieb einer nichtadaptiven Antenne entwickelt werden müßten.

Wird wie im oben beschriebenen Empfangsfall ein Antennensignal auf n analoge, trägerfrequente Funksignale aufgeteilt, verarbeitet und wieder zusammengefasst, so verbessert sich das Signal-Rausch-Verhältnis durch die kohärente Zusammenfassung der Einzelsignale typischerweise um den Faktor 2.

Durch die vorzugsweise Verwendung einer Butler-Matrix bzw. mindestens eines Wilkinson-Combiners werden die einzelnen Signale im wesentlichen verlustfrei zusammengeführt bzw. aufgeteilt.

Durch die Zusammenfassung von n trägerfrequenten Einzelsignalen zu einem Summensignal im Sendefall können kleinere Verstärkungsfaktoren für die Einzelsignale verwendet werden. Die verwendeten Leistungsverstärker weisen dabei typischerweise lineare Verstärkungskennlinien auf, wodurch Störfrequenzen innerhalb des Mobilfunksystems vermieden werden.

Im Folgenden wird ein Ausführungsbeispiel der Erfindung anhand einer Zeichnung näher erläutert. Dabei zeigt
- FIG 1: eine Anordnung für ein Mobilfunksystem mit einer Basisstation und einer Antenneneinrichtung nach dem Stand der Technik,
- FIG 2: eine Anordnung für ein Mobilfunksystem mit einer Basisstation und einer Antenneneinrichtung in einer ersten bevorzugten Ausführungsform gemäß der Erfindung, und
- FIG 3: eine Anordnung für ein Mobilfunksystem mit einer Basisstation und einer Antenneneinrichtung in einer zweiten bevorzugten Ausführungsform gemäß der Erfindung.

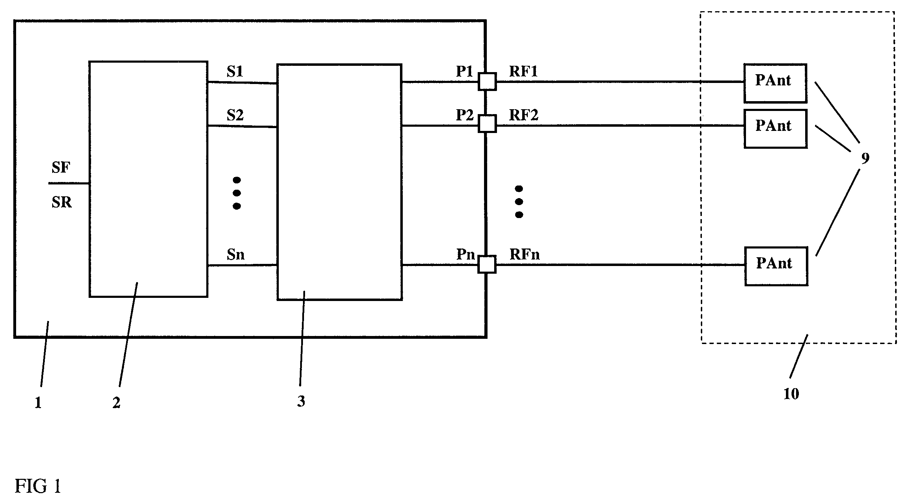

Die FIG 1 zeigt eine Anordnung für ein Mobilfunksystem mit einer Basisstation 1 und einer adaptiven Antenneneinrichtung 10 nach dem Stand der Technik. Die Basisstation 1 beinhaltet eine digitale Signalsteuerungseinrichtung 2, eine Einrichtung zur Signalumwandlung 3 und n untereinander entkoppelte Anschlüsse P1, P2, ..., Pn. Die adaptive Antenneneinrichtung 10 beinhaltet n Einzelantennen 9.

Die digitale Signalsteuerungseinrichtung 2 teilt im Sendefall ein zu sendendes digitales Signal SF in n in Amplitude und Frequenz im wesentlichen gleiche, in ihrer Phasenlage jedoch unterschiedliche digitale Einzelsignale S1, S2, ..., Sn auf und bildet im Empfangsfall aus diesen n Einzelsignalen S1, S2, ..., Sn ein Empfangssummensignal SR mit einheitlicher Phasenlage.
Die Einrichtung zur Signalumwandlung 3 bildet aus den n digitalen Einzelsignalen S1, S2, ..., Sn der Signalsteuerungseinrichtung 2 insgesamt n analoge, trägerfrequente Funksignale RF1, RF2, ..., RFn für die n untereinander entkoppelten Anschlüsse P1, P2, ...,Pn der Basisstation 1 und umgekehrt.

Die n analogen trägerfrequenten Funksignale RF1, RF2, ..., RFn werden jeweils auf eine Einzelantenne 9 der adaptiven Antenneneinrichtung 10 gegeben und formen durch ihre Phasenlage ein Summenstrahlungsdiagramm mit räumlicher Vorzugsrichtung.

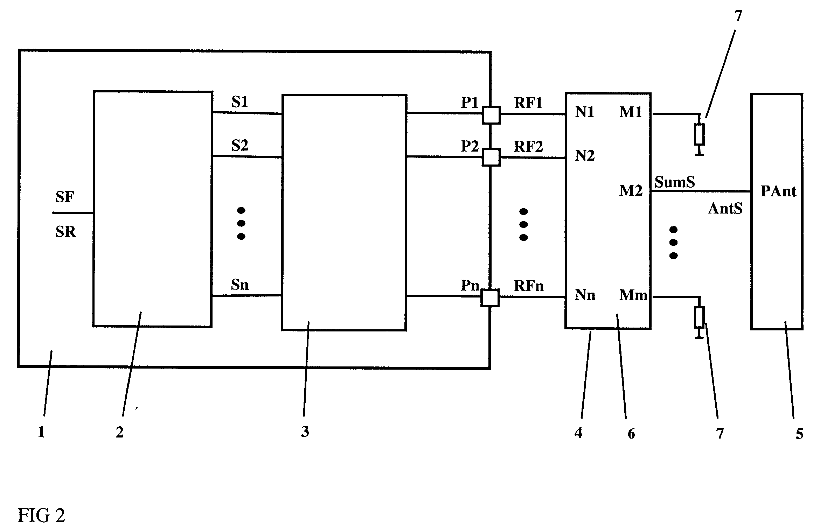

Die FIG 2 zeigt eine Anordnung für ein Mobilfunksystem mit einer Basisstation 1 gemäß FIG 1, einer Antenneneinrichtung 5 und einer Einrichtung 4 zur Zusammenführung bzw. Aufteilung in einer ersten bevorzugten Ausführungsform gemäß der Erfindung.
N analoge, trägerfrequente Funksignale RF1, RF2, ..., RFn, die an die n untereinander entkoppelten Anschlüsse P1, P2, ..., PN der im Zusammenhang mit FIG 1 bereits näher beschriebenen Basisstation 1 gelangen, werden im Sendefall durch die Einrichtung 4 zur Zusammenführung beziehungsweise Aufteilung derart miteinander verknüpft, dass ein an einem der Anschlüsse M2 der Einrichtung 4 auftretendes Summensignal SumS mit einheitlicher Phasenlage entsteht und als Antennensignal AntS an die Antenneneinrichtung 5 gelangt. Im Empfangsfall wird das Antennensignal AntS der Antenneneinrichtung 5, das als Summensignal SumS mit einheitlicher Phasenlage an die Einrichtung 4 zur Zusammenfassung bzw. Aufteilung gelangt, in die n in Frequenz und Amplitude im wesentlichen gleichen, jedoch in ihrer Phasenlage verschiedenen Funksignale RF1, RF2, ..., RFn aufgeteilt, die dann an die n Anschlüsse P1, P2, ..., PN der Basisstation 1 gelangen.

Vorteilhafterweise besteht die Einrichtung 4 zur Zusammenführung bzw. Aufteilung aus einer Butler-Matrix 6 mit n Anschlüssen N1, N2, ..., Nn für die Funksignale RF1, RF2, ..., RFn der Basisstation 1 und m Anschlüsse M1, M2, ..., Mn für Antennensignale AntS bzw. Summensignale SumS, wobei das Summensignal SumS bzw. das Antennensignal AntS an nur einen der m Anschlüsse M2 gelangt und alle weiteren Anschlüsse M1, ..., Mm jeweils mit einem Abschlusswiderstand 7 abgeschlossen sind. Dabei weisen vorteilhafterweise die Funksignale RF1, RF2, ..., RFn untereinander eine im wesentlichen linear ansteigende Phasenlage auf.

Das Antennensignal AntS wird über die Antenneneinrichtung 5, die nur einen Anschluss beinhaltet, abgestrahlt. Dabei kann die Antenneneinrichtung 5 sowohl als Einzelantenne als auch als Gruppenantenne realisiert werden.

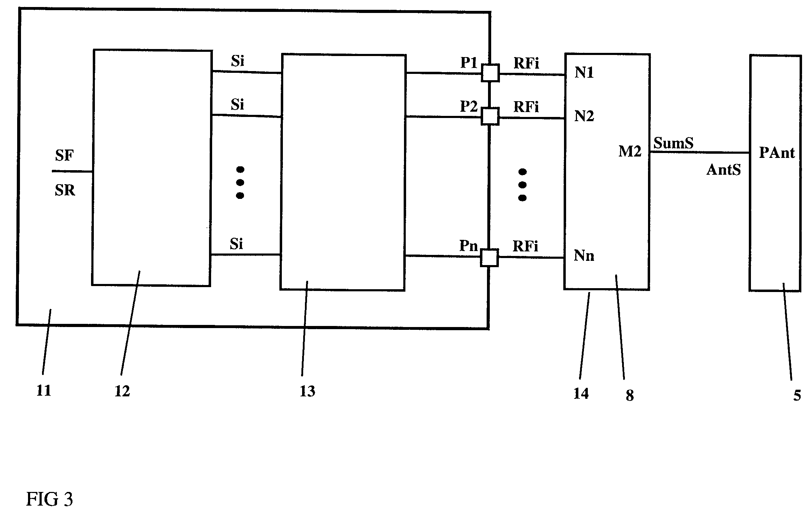

Die FIG 3 zeigt eine Anordnung für ein Mobilfunksystem mit einer Basisstation 11, die eine digitale Signalsteuerungseinrichtung 12, eine Einrichtung zur Signalumwandlung 13 und n untereinander entkoppelte Anschlüsse P1,P2, ..., Pn beinhaltet, mit einer Antenneneinrichtung 5 und mit einer Einrichtung 14 zur Zusammenführung bzw. Aufteilung in einer zweiten bevorzugten Ausführungsform gemäß der Erfindung.

Die digitale Signalsteuerungseinrichtung 12 teilt im Sendefall ein zu sendendes, digitales Signal SF in n sowohl in Amplitude und Frequenz als auch in ihrer Phasenlage im wesentlichen gleiche, digitale Einzelsignale Si auf und bildet im Empfangsfall aus diesen n Einzelsignalen Si ein Empfangssummensignal SR mit einheitlicher Phasenlage.
Die Einrichtung zur Signalumwandlung 13 bildet aus den n Einzelsignalen Si der Signalsteuerungseinrichtung 12 insgesamt n analoge, trägerfrequente Funksignale RFi für die n untereinander entkoppelten Anschlüsse P1, P2, ...,Pn der Basisstation 11 und umgekehrt.

Im Sendefall werden die n analogen trägerfrequenten Funksignale RFi der n untereinander entkoppelten Anschlüsse P1, P2, ..., PN der Basisstation 11 durch die Einrichtung 14 zur Zusammenführung bzw. Aufteilung derart miteinander verknüpft, dass ein an einem der Anschlüsse M2 der Einrichtung 14 zur Zusammenführung bzw. Aufteilung auftretendes Summensignal SumS mit einheitlicher Phasenlage entsteht und dieses als Antennensignal AntS an die Antenneneinrichtung 5 gelangt. Im Empfangsfall wird das Antennensignal AntS der Antenneneinrichtung 5, das als Summensignal SumS mit einheitlicher Phasenlage an die Einrichtung 14 zur Zusammenfassung bzw. Aufteilung gelangt, in die n in Frequenz, Amplitude und Phasenlage im wesentlichen gleichen Funksignale RFi aufgeteilt, die an die n Anschlüsse P1, P2, ..., PN der Basisstation 11 gelangen.

Vorteilhafterweise beinhaltet die Einrichtung 14 zur Zusammenführung bzw. Aufteilung mindestens einen Wilkinson-Combiner 8, mit dessen Hilfe je zwei Signale zusammengefasst werden.

Die Einrichtung zur Signalumwandlung 13 bildet mit Hilfe eines Digital/Analog-Wandlers, einer Mischeinrichtung und einer Modulationseinrichtung aus den n Einzelsignalen Si der Signalsteuerungseinrichtung n analoge, trägerfrequente Funksignale RFi und umgekehrt.

Das Antennensignal AntS wird über die Antenneneinrichtung 5, die nur einen Anschluss PAnt beinhaltet, abgestrahlt. Dabei kann die Antenneneinrichtung sowohl als Einzelantenne als auch als Gruppenantenne realisiert werden.

## Patentansprüche

1. Anordnung für ein Mobilfunk-System mit einer Basisstation (1) und einer Antenneneinrichtung (5),
bei der die Basisstation (1) eine digitale Signalsteuerungseinrichtung (2) beinhaltet, die im Sendefall ein zu sendendes digitales Signal (SF) in n in Amplitude und Frequenz im wesentlichen gleiche, in ihrer Phasenlage jedoch unterschiedliche digitale Einzelsignale (S1,S2,Sn) aufteilt und die im Empfangsfall aus den n Einzelsignalen (S1,S2,Sn) ein Empfangssummensignal (SR) mit einheitlicher Phasenlage bildet,
bei der in der Basisstation (1) eine Einrichtung (3) zur Signalumwandlung der n Einzelsignale (S1,S2,Sn) der Signalsteuerungseinrichtung in n analoge, trägerfrequente Funksignale (RF1,RF2,RFn) für n untereinander entkoppelte Anschlüsse (P1,P2,Pn) der Basisstation (1) und umgekehrt beinhaltet,
bei der zur Anschaltung der Basisstation (1) an eine nichtadaptive Antenneneinrichtung (5) zwischen der Basisstation (1) und der Antenneneinrichtung (5) eine Einrichtung (4) zur Zusammenführung bzw. Aufteilung angeordnet ist, die im Sendefall die an den n Anschlüssen (P1,P2,Pn) der Basisstation (1) auftretenden Funksignale (RF1,RF2,RFn) mit im wesentlichen gleicher Amplitude und Frequenz aber verschiedener Phasenlage derart miteinander verknüpft, daß ein an einem der Anschlüsse (M2) der Einrichtung (4) zur Zusammenführung bzw. Aufteilung auftretendes Summensignal (SumS) mit einheitlicher Phasenlage entsteht und als Antennensignal (AntS) an die Antenneneinrichtung (5) gelangt und die im Empfangsfall das Antennensignal (AntS) der Antenneneinrichtung (5), das als Summensignal (SumS) mit einheitlicher Phasenlage an die Einrichtung (4) zur Zusammenfassung bzw. Aufteilung gelangt, in die n in Frequenz und Amplitude im wesentlichen gleichen, jedoch in ihrer Phasenlage verschiedenen Funksignale (RF1,RF2,RFn) aufteilt, die an die n Anschlüsse (P1,P2,Pn) der Basisstation (1) gelangen.

2. Anordnung nach Anspruch 1, bei der die Einrichtung (4) zur Zusammenführung bzw. Aufteilung eine Butler-Matrix (6) beinhaltet, die n Anschlüsse (N1,N2,Nn) für die Funksignale (RF1,RF2,RFn) der Basisstation (1) und m Anschlüsse (M1,M2,Mm) für Antennensignale (AntS) bzw. Summensignale (SumS) aufweist, wobei das Summensignal (SumS) bzw. das Antennensignal (AntS) an nur einen der m Anschlüsse (M2) gelangt und alle weiteren Anschlüsse (M1,Mm) jeweils mit einem Abschlußwiderstand (7) abgeschlossen sind.

3. Anordnung nach Anspruch 2, bei der die Funksignale (RF1,RF2,RFn) der Basisstation (1) untereinander eine im wesentlichen linear ansteigende Phasenlage aufweisen.

4. Anordnung für ein Mobilfunk-System mit einer Basisstation (11) und einer Antenneneinrichtung (5)
bei der die Basisstation (11) eine digitale Signalsteuerungseinrichtung (12) beinhaltet, die im Sendefall ein zu sendendes digitales Signal (SF) in n sowohl in Amplitude und Frequenz als auch in ihrer Phasenlage im wesentlichen gleiche digitale Einzelsignale (Si) aufteilt und die im Empfangsfall aus den n Einzelsignalen (Si) ein Empfangssummensignal (SR) mit einheitlicher Phasenlage bildet,
bei der in der Basisstation (11) eine Einrichtung (13) zur Signalumwandlung der n Einzelsignale (Si) der Signalsteuerungseinrichtung (12) in n analoge, trägerfrequente Funksignale (RFi) für n untereinander entkoppelte Anschlüsse (P1,P2,..., Pn) der Basisstation (11) und umgekehrt beinhaltet,
bei der zur Anschaltung der Basisstation (11) an eine nichtadaptive Antenneneinrichtung (5) zwischen der Basisstation (11) und der Antenneneinrichtung (5) eine Einrichtung (14) zur Zusammenführung bzw. Aufteilung angeordnet ist, die im Sendefall die an den n Anschlüssen (P1,P2,..., Pn) der Basisstation (11) auftretenden Funksignale (RFi) mit im wesentlichen gleicher Amplitude, Frequenz und Phasenlage derart miteinander verknüpft, daß ein an einem der Anschlüsse (M2) der Einrichtung (14) zur Zusammenführung bzw. Aufteilung auftretendes Summensignal (SumS) mit einheitlicher Phasenlage entsteht und als Antennensignal (AntS) an die Antenneneinrichtung (5) gelangt und die im Empfangsfall das Antennensignal (AntS) der Antenneneinrichtung (5), das als Summensignal (SumS) mit einheitlicher Phasenlage an die Einrichtung (14) zur Zusammenfassung bzw. Aufteilung gelangt, in die n in Frequenz, Amplitude und Phasenlage im wesentlichen gleichen Funksignale (RFi) aufteilt, die an die n Anschlüsse (P1,P2,..., Pn) der Basisstation (11) gelangen.

5. Anordnung nach Anspruch 4, bei der die Einrichtung (14) zur Zusammenführung bzw. Aufteilung mindestens einen Wilkinson-Combiner (8) beinhaltet.

6. Anordnung nach Anspruch 1 oder 4, bei der die Antenneneinrichtung (5) nur einen Anschluss (PAnt) beinhaltet, an dem das Antennensignal (AntS) bzw. das Summensignal (SumS) anliegt.
